# EUROPEAN PATENT SPECIFICATION

(11) **EP 1 240 468 B1**
(45) Date of publication and mention of the grant of the patent: **09.02.2005**
(21) Application number: 00975693.3
(22) Date of filing: 09.11.2000
(51) Int. Cl.: F25D 23/08

(54) **A GASKET ARRANGEMENT FOR THE CABINET DOOR OF A REFRIGERATION APPLIANCE**
DICHTUNG FÜR KÜHLSCHRANKTÜR
ENSEMBLE JOINT D'ETANCHEITE DE LA PORTE D'UNE ARMOIRE DE REFRIGERATION

(30) Priority: 21.12.1999 BR 7903121 U
(43) Date of publication of application: 18.09.2002
(73) Proprietor: Multibras S.A. Eletrodomésticos, CEP-04578-000 Sao Paulo, SP (BR)
(72) Inventor: Marques, Marco Eduardo, CEP-89204-060 Joinville, SC (BR); Ferreira, Gilmar Canali, CEP-89203-060 Joinville SC (BR); Thomaz, Geraldo Luiz, CEP-89221-000 Joinville, SC (BR); Corino, Leandro Hermán, Provincia de Buenos Aires (AR)
(74) Representative: Held, Stephan, Dr.rer.nat., Dipl.-Chem.
(86) International application number: PCT/BR2000/000124
(87) International publication number: WO 2001/046633

(56) References cited:
- EP-A- 0 583 984
- US-A- 5 117 587
- US-A- 5 551 192

## Description

### Field of the Invention

The present invention refers to a refrigeration appliance according to the preamble of claim 1. Such a refrigeration appliance is known from EP-A-0 583 984.

### Background of the Invention

The cabinets for the refrigeration appliances considered herein usually consist of a surrounding outer wall, in metallic plate, to which is coupled an inner box, which is usually molded in polystyrene or similar material of reduced thermal conductivity, and whose peripheral edge is seated and affixed against the free edge of a peripheral front flange of the surrounding outer wall, said front flange projecting orthogonal to the inside of the cabinet, in order to define a peripheral portion of the front face of said cabinet. Against said front face peripheral portion is seated a sealing gasket carried by the cabinet door, which is also made of an outer panel in metallic plate, incorporating a surrounding peripheral wall and a peripheral flange, to which is affixed the sealing gasket. To the outer panel is affixed an inner panel which is also usually molded in polystyrene or similar material.

Between the surrounding outer wall and the inner box of the cabinet and between the inner and outer panels of the door is provided a thermal insulating filler in polyurethane.

In this type of construction, the front wall of the cabinet is defined by the peripheral front flange of the outer wall, forming an integral part therewith and extending by a width sufficient to define a seating surface for the sealing gasket and a fixation surface for the peripheral edge of the inner box of the cabinet, said peripheral front flange acting as a heat conducting element, conducting heat from the outside to the inside of the refrigerated cabinet.

The same operational deficiency of the prior art construction occurs in relation to the peripheral rear flange of the outer panel of the door. Said rear flange has a width sufficient to affix the sealing gasket and the peripheral edge of the inner panel, thus also acting as a heat conducting element, conducting heat to the inside of the cabinet.

It should be observed that the width of the front and rear peripheral flanges is superior to the width of the sealing gasket, making their marginal portions, which are going to be coupled to the inner box and to the inner panel, respectively, be positioned inside the refrigerated environment which has been sealed by the gasket.

It is known in the art that the penetration of heat into the refrigerated cabinet occurs not only by the sealing gasket itself, but also and mainly by the region in which it is installed, i.e., by the front peripheral flange of the cabinet and by the rear peripheral flange of the door which are constructed in metallic plate and in direct contact with the environment external to the refrigerated cabinet.

Typical values for the penetration of heat into the region of the sealing gasket reach about 20% the total penetration of heat (thermal load) into the inside of the cabinet. Considering that most of the heat that penetrates into the cabinet is conducted through said metallic flanges operatively associated with the gasket, the replacement of the elastomeric material, which is generally used for said gasket, by an insulating material, will therefore lead to a relatively low gain in terms of reducing the penetration of heat into the refrigerated environment.

### Disclosure of the Invention

Thus, it is an object of the present invention to provide a refrigeration appliance, such as a refrigerator or freezer with a gasket arrangement for the cabinet door which allows, by a simple construction and without requiring alteration in the design of any of the parts of the refrigeration appliance, to attain a relevant reduction in the penetration of heat into the refrigerated environment.

The objective mentioned above is achieved by the provision of a refrigeration appliance according to claim 1.

With the new constructive arrangement, which is obtained by the simple application of a cord of elastomeric material preferably of the hot melt type, for example to the inner box of the cabinet, it is possible to form a heat insulating barrier between the environment immediately internal to the sealing gasket and in contact with the marginal portions of the metallic flanges operatively associated with said sealing gasket and the internal environment of the refrigerated cabinet, minimizing the heat transfer to the inside of said cabinet through said metallic flanges.

### Brief Description of the Drawing

The invention will be described below, with reference to the appended drawing, in which:

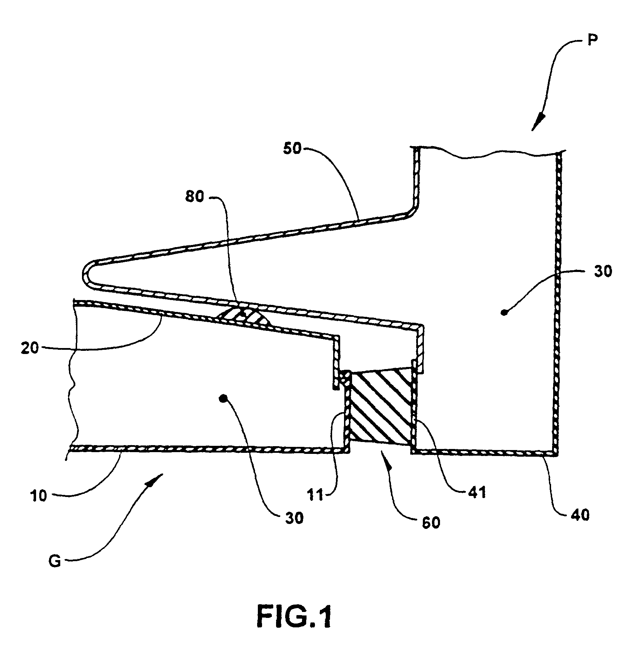

Figure 1 is a simplified partial cross-sectional view of a cabinet-door assembly of a refrigeration appliance provided with the gasket arrangement of the present invention.

### Best Mode of Carrying Out the Invention

As already mentioned above and illustrated in the appended drawing, the present gasket arrangement is applied to refrigeration appliances, such as refrigerators and freezers having a cabinet G, and formed by a surrounding outer wall 10 in metallic plate and incorporating a peripheral front flange 11, to whose marginal portion is seated and affixed the peripheral edge of an inner box 20, which is usually molded in polystyrene or other material of reduced thermal conductivity.

Between the surrounding outer wall 10 and the inner box 20 is provided a heat insulator in the form of a filler 30, for example in polyurethane.

The cabinet G is usually closed at the front by at least one door P, which is conveniently made of an outer panel 40 in metallic plate, incorporating a peripheral rear flange 41, to whose marginal portion is seated and affixed the peripheral edge of an inner panel 50 usually molded in polystyrene. The inside of the door P also comprises a filler 30, such as that used in the cabinet G.

This prior art construction further has a sealing gasket 60, usually made of an elastomeric material and affixed to the peripheral rear flange 41 of the door P, so as to be seated against the peripheral front flange 11 of the cabinet G. Both the front and the rear peripheral flanges 11 and 41 have a width usually superior to that of the sealing gasket 60.

According to the invention, the present gasket arrangement comprises at least one additional gasket 80, in elastomeric material and of reduced thermal conductivity, such as for example, expanded polyurethane, which is usually affixed to the inner box 20 of the cabinet G, in an internal region in relation to the sealing gasket 60 and dimensioned to be seated against the inner panel 50 of the door P, when the latter is closed. It should be understood that the additional gasket 80 may be affixed to either the inner box 20 or to the inner panel 50, said fixation causing no alteration in its function of creating at least one additional thermal barrier between the marginal portions of the front and rear peripheral flanges 11 and 41 and the refrigerated environment of the cabinet G.

The additional gasket 80 may be provided by applying, for example, a cord made of expanded polyurethane of the hot melt type directly to the surface of the inner box 20 or the inner panel 50. The application of the polyurethane-based cord, for example by extrusion, may be carried out without any previous alteration in the design of the plastic internal parts of the refrigeration appliance or inside a respective housing (not illustrated) provided in che inner box 20 or in the inner panel 50, in order to avoid shear forces in the material of the gaskets.

The reduction of the thermal load in the refrigeration appliance obtained with the new arrangement has the advantage of reducing the internal temperature of the cabinet and increasing energy saving, besides making possible to use a refrigeration system with lower capacity.

## Claims

1. A refrigeration appliance of comprising a cabinet (G) having a surrounding outer wall (10) in metallic plate affixing an inner box (20) in a material of reduced thermal conductivity; a respective door (P) having an outer panel (40) in metallic plate affixing an inner panel (50) in a material of reduced thermal conductivity; a sealing gasket (60), which is operatively associated with a peripheral rear flange (41) of the outer panel (40) and with a peripheral front flange (11) of the surrounding outer wall (10); and one additional gasket (80) in elastomeric material of reduced thermal conductivity, which is affixed, to one of the parts defined by the inner panel (50) of the door (P) and by the inner box (20) of the cabinet (G), internal to the sealing gasket (60), and which is seated to the other of said parts upon closing of the door (P), **characterized in that** the additional gasket (80) is obtained from a cord of elastomeric material, the cord of elastomeric material being extruded directly onto the surface that will carry it.

2. The refrigeration appliance of claim 1, **characterized in that** the additional gasket (80) is affixed inside a housing provided on the surface to which it is affixed.

## Patentansprüche

1. Kühlgerät, das umfasst: ein Gehäuse (G) mit einer umgebenden Außenwand (10) aus einem Metallblech, an der ein Innenkasten (20) aus einem Werkstoff mit verringerter Wärmeleitfähigkeit befestigt ist; eine entsprechende Tür (P) mit einer Außenplatte (40) aus einem Metallblech, an der eine Innenplatte (50) aus einem Werkstoff mit verringerter Wärmeleitfähigkeit befestigt ist; eine Dichtung (60), die einem hinteren Umfangsflansch (41) der Außenplatte (40) und einem vorderen Umfangsflansch (11) der umgebenden Außenwand (10) funktional zugeordnet ist; und eine zusätzliche Dichtung (80) aus einem elastomeren Werkstoff mit verringerter Wärmeleitfähigkeit, die an einem der durch die Innenplatte (50) der Tür (P) und durch den Innenkasten (20) des Gehäuses (G) definierten Teile innerhalb der Dichtung (60) befestigt ist und beim Schließen der Tür (P) an dem jeweils anderen der Teile anliegt, **dadurch gekennzeichnet, dass** die zusätzliche Dichtung (80) aus einer Schnur aus einem elastomeren Werkstoff gebildet ist, die aus dem elastomeren Werkstoff direkt auf die Oberfläche, die sie tragen soll, extrudiert ist.

2. Kühlgerät nach Anspruch 1, **dadurch gekennzeichnet, dass** die zusätzliche Dichtung (80) innerhalb einer an der Oberfläche, an der sie befestigt ist, vorgesehenen Aufnahme befestigt ist.

## Revendications

1. Appareil de réfrigération comportant une armoire (G) ayant une paroi extérieure entourante (10) dans une plaque métallique fixant une caisse intérieure (20) en une matière à conductivité thermique réduite ; une porte respective (P) ayant un panneau extérieur (40) en tôle métallique fixé à un panneau intérieur (50) en une matière de conductivité thermique réduite ; une garniture d'étanchéité (60) qui est associée fonctionnellement à un rebord arrière périphérique (41) du panneau extérieur (40) et à un rebord avant périphérique (11) de la paroi extérieure entourante (10) ; et une garniture supplémentaire (80) en matière élastomérique de conductivité thermique réduite, qui est fixée à l'une des pièces définies par le panneau intérieur (50) de la porte (P) et par le caisson intérieur (20) de l'armoire (G), intérieurement à la garniture (60) d'étanchéité, et qui est en appui sur l'autre desdites pièces lors de la fermeture de la porte (P), **caractérisé en ce que** la garniture supplémentaire (80) est obtenue à partir d'un cordon de matière élastomérique, le cordon de matière élastomérique étant extrudé directement sur la surface qui le porte.

2. Appareil de réfrigération selon la revendication 1, **caractérisé en ce que** la garniture supplémentaire (80) est fixée à l'intérieur d'un logement prévu sur la surface à laquelle elle est fixée.
